# EUROPÄISCHE PATENTSCHRIFT

(11) **EP 1 042 040 B1**
(45) Veröffentlichungstag und Bekanntmachung des Hinweises auf die Patenterteilung: **13.04.2005**
(21) Anmeldenummer: 99948912.3
(22) Anmeldetag: 01.10.1999
(51) Int. Cl.: B01D 3/40, B01D 3/36

(54) **REKTIFIZIERKOLONNE FÜR DIE EXTRAKTIVDESTILLATION VON ENG- ODER AZEOTROP SIEDENDEN GEMISCHEN**
RECTIFYING COLUMN FOR EXTRACTIVE DISTILLATION OF CLOSE-BOILING OR AZEOTROPIC BOILING MIXTURES
COLONNE DE RECTIFICATION POUR DISTILLATION EXTRACTIVE DE MELANGES A POINT D'EBULLITION ETROIT OU CONSTANT

(30) Priorität: 29.10.1998 DE 19849651
(43) Veröffentlichungstag der Anmeldung: 11.10.2000
(73) Patentinhaber: Uhde GmbH, 44141 Dortmund (DE)
(72) Erfinder: EMMRICH, Gerd, D-45133 Essen (DE); KOLBE, Bärbel, D-58452 Witten (DE); GEHRKE, Helmut, D-45131 Essen (DE); ENNENBACH, Frank, D-45147 Essen (DE); RANKE, Uwe, D-45128 Essen (DE)
(74) Vertreter: Albrecht, Rainer Harald, Dr.-Ing.
(86) Internationale Anmeldenummer: PCT/EP1999/007285
(87) Internationale Veröffentlichungsnummer: WO 2000/025881

(56) Entgegenhaltungen:
- EP-A- 0 133 510
- EP-A- 0 684 060
- DE-A- 19 545 915
- GB-A- 1 075 208
- US-A- 2 366 360
- US-A- 3 412 016
- US-A- 3 881 994
- US-A- 5 339 648
- PATENT ABSTRACTS OF JAPAN vol. 199, no. 803, 27. Februar 1998 (1998-02-27) & JP 09 299701 A (KYOWA YUKA KK; SUMITOMO HEAVY IND LTD), 25. November 1997 (1997-11-25)

## Beschreibung

Die Erfindung betrifft eine Rektifizierkolonne für die Extraktivdestillation von eng- oder azeotrop siedenden Gemischen mit
einem Kolonnenhauptabschnitt und einer Raffinatsektion oberhalb des Kolonnenhauptabschnittes,
einer Verdampfungseinrichtung am unteren Säulenende mit mindestens einem Verdampfer,
einer Anordnung am Kopf der Kolonne mit Raffinatabzug, Kondensator und einer Einrichtung für eine Teilrückführung des in einem Kondensator verflüssigten Raffinats,
einem Zulauf zwischen dem Kolonnenhauptabschnitt und der Raffinatsektion für die Aufgabe eines zu trennenden Ausgangsgemisches und
einem Lösungsmittelzulauf an der Oberseite der Raffinatsektion für die Aufgabe von Extraktionsmittel.

Bekannte Anlagen für die Extraktivdestillation weisen neben der beschriebenen Kolonne eine weitere Rektifizierkolonne auf, in der das aus der ersten Kolonne abgezogene Sumpfprodukt in reines Extraktionsmittel und einen reinen Produktstrom aufgetrennt wird (ULLMANN Enzyklopädie der technischen Chemie, Band 2, 4. Auflage, Seite 511; EP-B 0 216 991). Das Extraktionsmittel fällt im Sumpf der zweiten Kolonne an und wird dem Lösungsmittelzulauf der ersten Kolonne wieder zugeführt. Am Kopf der zweiten Kolonne wird ein reiner Produktstrom, im folgenden auch Extrakt genannt, abgezogen. Die im Rahmen der bekannten Maßnahmen für die Rückgewinnung des Extraktionsmittels erforderliche zweite Kolonne weist einen als Auftriebsteil mit mehreren theoretischen Trennböden ausgelegten Kolonnenabschnitt oberhalb des Zulaufes, einen als Abtriebsteil ausgelegten Kolonnenschuß unterhalb des Zulaufes, eine Sumpfbeheizung sowie eine Anordnung am Kopf der Kolonne mit Produktabzug, Kondensator und einer Einrichtung für eine Teilrückführung des im Kondensator verflüssigten Produktes auf.

Der Platzbedarf für die Aufstellung einer Anlage mit zwei Kolonnen einschließlich der dazu gehörenden Verrohrung ist beachtlich und steht zuweilen nicht zur Verfügung, wenn sie in einer bereits vorhandenen Chemieanlage errichtet werden muß.

Aus DE-A-33 27 952 ist eine Rektifizierkolonne für die Extraktivdestillation bekannt, mit der die Trennung eines azeotropen Zweistoffgemisches in seine Einzelkomponenten möglich ist. Sie weist einen Kolonnenhauptabschnitt mit zwei parallel geschalteten Kammern auf, wobei eine Kammer oberseitig und unterseitig offen ist und als Abtriebsteil für die Abtrennung des Raffinats aus dem extraktionsmittelhaltigen Gemisch ausgelegt werden kann. Die andere Kammer ist oberseitig gegenüber dem Innenraum der Kolonne geschlossen und lediglich unterseitig offen. An einem Seitenabzug dieser Kammer ist ein im wesentlichen extraktionsmittelfreies Produkt abziehbar. Der Kolonnensumpf am unteren Säulenende ist ferner durch eine Einrichtung zur Extraktionsmittelrückführung mit dem Lösungsmittelzulauf verbunden.

Der Erfindung liegt die Aufgabe zugrunde, eine Rektifizierkolonne des aus DE-A-33 27 952 bekannten Aufbaus so weiter auszubilden, daß beide Kammern mit den für die Trennaufgaben erforderlichen Strippdampfmengen beaufschlagbar sind und das Extraktionsmittel mit hoher Reinheit aus dem Kolonnensumpf zum Lösungsmittelzulauf zurückgeführt werden kann.

Gegenstand der Erfindung und Lösung dieser Aufgabe ist eine Rektifizierkolonne für die Extraktivdestillation von eng- oder azeotrop siedenden Gemischen mit
einem Kolonnenhauptabschnitt, der zwei parallel geschaltete Kammern aufweist,
einer Raffinatsektion oberhalb des Kolonnenhauptabschnittes,
einer Verdampfungseinrichtung am unteren Säulenende mit mindestens einem Verdampfer,
einer Anordnung am Kopf der Kolonne mit Raffinatabzug, Kondensator und einer Einrichtung für eine Teilrückführung des im Kondensator verflüssigten Raffinats,
einem Zulauf zwischen dem Kolonnenhauptabschnitt und der Raffinatsektion für die Aufgabe eines zu trennenden Ausgangsgemisches und
einem Lösungsmittelzulauf an der Oberseite der Raffinatsektion für die Aufgabe von Extraktionsmittel,
wobei eine Kammer des Kolonnenhauptabschnittes oberseitig und unterseitig offen ist, Einbauten zur Verbesserung des Stoffaustausches enthält und als Abtriebsteil mit mehreren theoretischen Trennstufen für die Abtrennung des Raffinats aus dem extraktionsmittelhaltigen Gemisch ausgelegt ist, wobei die andere Kammer oberseitig gegenüber dem Innenraum der Kolonne geschlossen und unterseitig offen ist, Einbauten zur Förderung des Stoffaustausches enthält und in einem Raum oberhalb der Einbauten Einrichtungen für den dampfförmigen Abzug eines im wesentlichen extraktionsmittelfreien Produktes sowie für den Rückfluß eines verflüssigten Produktteilstromes aufweist, und wobei der Kolonnensumpf am unteren Säulenende durch eine Einrichtung zur Extraktionsmittelrückführung mit dem Lösungsmittelzulauf verbunden ist und wobei erfindungsgemäß ferner folgende Merkmale verwirklicht sind:
- Zwischen dem Kolonnensumpf und dem Kolonnenhauptabschnitt ist ein Kolonnenabtriebsteil mit mehreren theoretischen Trennstufen angeordnet, in dem von oben nach unten eine Aufkonzentrierung des Extraktionsmittels erfolgt;
- unterhalb des Kolonnenhauptabschnittes ist ein gasdurchlässiger Fangboden angeordnet, dessen Flüssigkeitsablauf an einen Durchlauferhitzer zur Beheizung der aus den beiden Kammern des Kolonnenhauptabschnittes ablaufenden Flüssigkeit angeschlossen ist;
- das aus dem Durchlauferhitzer austretende erhitzte Gemisch ist unterhalb des Fangbodens dem Abtriebsteil der Kolonne zuführbar.

Gemäß einer bevorzugten Ausführung der Erfindung erfolgt die Beheizung des Durchlauferhitzers im Wärmeaustausch mit dem aus dem Kolonnensumpf abgezogenen Extraktionsmittelstrom.

Die erfindungsgemäße Lehre reduziert die Extraktivdestillationsanlage auf eine einzige Kolonne, in der Kolonnenabschnitte für die Rückgewinnung des Extraktionsmittels sowie für die Anreichung des Extraktes integriert sind. Das Extraktionsmittel wird oberhalb der Raffinatsektion aufgegeben. Ein Teil der Komponenten des Ausgangsgemisches geht bevorzugt als Extrakt in Lösung und wird von dem Extraktmittelstrom in der Raffinatsektion ausgewaschen. Der andere Teil des Ausgangsgemisches geht dampfförmig als Raffinat zum Kolonnenkopf. In der oberseitig und unterseitig offenen Kammer des Kolonnenhauptabschnittes wird der gelöste Raffinatanteil durch Dampfstrippung abgereichert. An der Unterseite dieser Kammer tritt ein Gemisch aus, welches im wesentlichen aus dem Extraktionsmittel und dem darin gelösten Extrakt besteht und zumeist nur noch Spuren des gelösten Raffinats enthält. In dem darunter angeordneten Kolonnenabtriebsteil wird das Extrakt aus dem Extraktionsmittel durch Dampfstrippung abgetrieben. Ein Teilstrom der in der Kolonne aufsteigenden Dämpfe tritt in die unterseitig und oberseitig offene Kammer des Kolonnenhauptabschnittes ein und strippt hier das Raffinat. Ein anderer Teilstrom tritt in die zweite, oberseitig gegenüber dem Innenraum der Kolonne geschlossene Kammer des Kolonnenhauptabschnittes ein. In dieser Kammer, im folgenden auch Produktsektion genannt, wird das Extraktionsmittel, welches entsprechend dem Lösungsmittelpartialdruck zusammen mit den Produktdämpfen aufsteigt, durch Produktrückfluß abgereichert und mit dem Produktrückfluß in den Kolonnenabtriebsteil geführt. Im Sumpf der Kolonne fällt das Extraktionsmittel im wesentlichen in reiner Form an. Es wird gekühlt und dem Lösungsmittelzulauf oberhalb der Raffinatsektion wieder zugeführt.

Im Rahmen der Erfindung liegt es, daß der Kolonnenhauptabschnitt aus zwei selbständigen, im wesentlichen nebeneinander angeordneten Kolonnenschüssen besteht, die an ihrem unteren Ende durch einen Verteiler an den Kolonnenabtriebsteil angeschlossen sind. Vorzugsweise ist der Kolonnenhauptabschnitt jedoch als zylindrischer Kolonnenschuß ausgebildet, der zwischen einem die Raffinatsektion bildenden Kolonnenabschnitt und dem Kolonnenabtriebsteil eingebaut ist und einen Einsatz enthält, der die oberseitig geschlossene Kammer bildet. Der Einsatz kann zylindrisch ausgebildet und mittig angeordnet sein. Konstruktiv einfacher und bevorzugt ist jedoch eine Lösung, bei der der Einsatz aus einer an den Mantel des Kolonnenschusses angeschlossenen, in Längsrichtung der Kolonne sich erstreckenden Trennwand sowie einer Abdeckung, die an die Trennwand und einen Mantelabschnitt des Kolonnenschusses angeschlossen ist, besteht. Die Trennwand teilt den Querschnitte des Kolonnenschusses in zwei Sektionen. Die Aufteilung der Sektionen richtet sich nach der erforderlichen Aufteilung des aufsteigenden Dampfes auf die beiden Kammern.

Zwischen der Raffinatsektion und dem Kolonnenhauptabschnitt ist zweckmäßig ein gasdurchlässiger Fangboden für Flüssigkeit vorgesehen, wobei an den Fangboden ein Flüssigkeitsverteiler angeschlossen ist, der die ablaufende Flüssigkeit auf die Einbauten der oberseitig offenen Kammer des Kolonnenhauptabschnittes aufgibt.

Die erfindungsgemäße Rektifizierkolonne kann oberhalb der Raffinatzone einen Kolonnenabschnitt zur Raffinatreinigung aufweisen, der sich von dem Lösungsmittelzulauf bis zum Kopf der Kolonne erstreckt und üblicherweise mehrere theoretische Trennstufen aufweist.

Die erfindungsgemäße Rektifizierkolonne ermöglicht eine Extraktivdestillation auf engem Raum. Dies ist z.B. vorteilhaft, wenn in einer bestehenden Chemieanlage unter beengten Platzverhältnissen eine zusätzliche Extraktivdestillationsanlage zur Erweiterung der Produktionskapazitäten errichtet werden muß. Überraschenderweise wurde festgestellt, daß die erfindungsgemäße Rektifizierkolonne nicht nur einen wesentlich geringeren Platzbedarf erfordert als eine nach dem Stand der Technik ausgebildete Anlage mit zwei Kolonnen, sondern auch der Energiebedarf bei gleicher Durchsatzkapazität, Produktreinheit und Produktausbeute deutlich sinkt. Dies wird anhand der nachfolgenden Ausführungsbeispiele deutlich.

Im folgenden wird die Erfindung anhand einer lediglich ein Ausführungsbeispiel darstellenden Zeichnung erläutert. Es zeigen
- Fig. 1: zunächst ein Anlagenschema nach dem Stand der Technik für die Extraktivdestillation von engsiedenden oder azeotrop siedenden Gemischen,
- Fig. 2: eine erfindungsgemäße Rektifizierkolonne für die Extraktivdestillation,
- Fig. 3: eine weitere Ausgestaltung der erfindungsgemäßen Rektifizierkolonne.

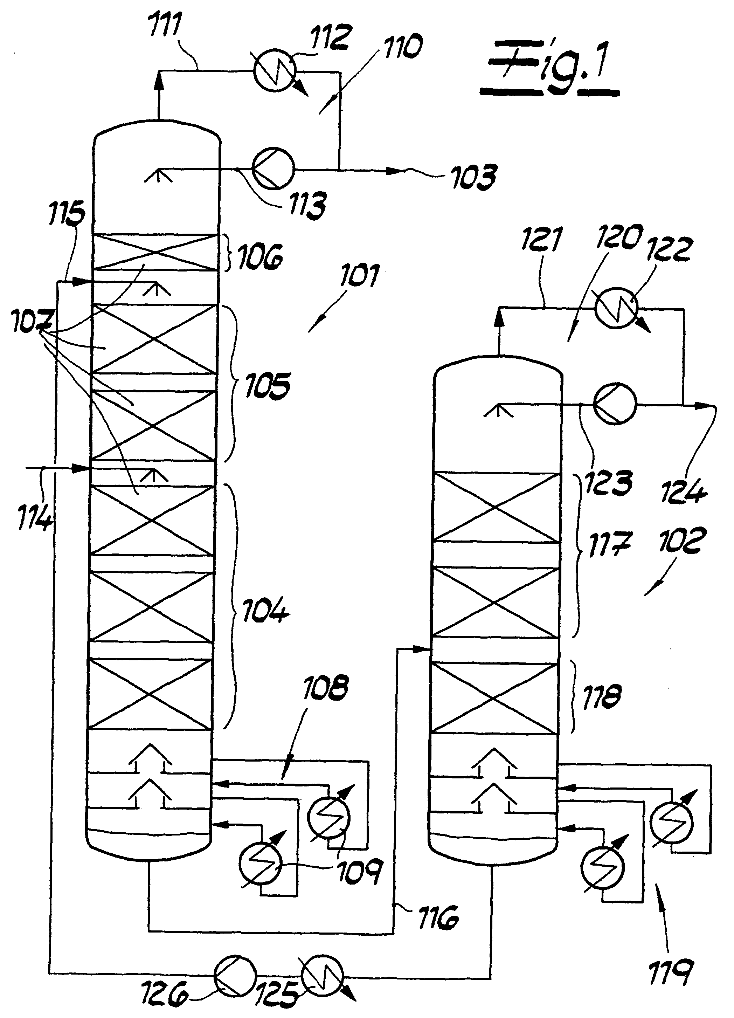

Eine Anlage nach dem Stand der Technik für die Extraktivdestillation von engsiedenden oder azeotrop siedenden Gemischen besteht aus zwei miteinander verschalteten Kolonnen 101, 102 (Fig. 1). Die erste Kolonne 101, in der ein Kopfprodukt 103 in reiner Form abgetrennt wird, weist von unten nach oben einen Kolonnenhauptabschnitt 104, eine Raffinatsektion 105 sowie einen Kolonnenabschnitt 106 für die Raffinatreinigung auf. Die Kolonnenabschnitte enthalten Einbauten 107 zur Förderung des Stoffaustausches zwischen Dampf- und Flüssigphase, z.B. in Form von Strukturpackungen. Die Einbauten 107 bilden jeweils mehrere theoretische Trennstufen. Am unteren Säulenende ist eine Verdampfungseinrichtung 108 mit im Ausführungsbeispiel zwei übereinander angeordneten Durchlaufverdampfern 109 vorgesehen. Der Kolonnenkopf weist eine Anordnung 110 mit Raffinatabzug 111, Kondensator 112 sowie eine Einrichtung 113 für eine Teilrückführung des im Kondensator 112 verflüssigten Raffinats auf.

Ein zu trennendes Kohlenwasserstoffgemisch, z.B. ein Gemisch aus Aromaten/Nichtaromaten, Olefinen/Paraffinen oder Olefinen/Paraffinen/Diolefinen, wird über einen zwischen dem Kolonnenhauptabschnitt 104 und der Raffinatsektion 105 angeordneten Zulauf 114 der Kolonne zugeführt. Ein Extraktionsmittel, z.B. ein polares Lösungsmittel zur Trennung von Kohlenwasserstoffgemischen, wird über einen Lösungsmittelzulauf 115 an der Oberseite der Raffinatsektion 105 aufgegeben. Am Kopf der Kolonne wird ein aromaten- bzw. olefin/diolefinarmes Kopfprodukt (Raffinat) dampfförmig abgezogen, in dem Kondensator 112 mit Wasser kondensiert und heruntergekühlt. Ein Teil des Kondensats wird zurück auf die Kolonne 101 gegeben und dient dort zur Rückwaschung von Spuren des Extraktionsmittels, welches gemäß seinem Partialdruck die Kolonne 101 mit dem Raffinat verläßt. Die Dämpfe, welche sowohl zur Verdampfung des Raffinats als auch Strippung der Verunreinigungen im Unterteil der Kolonne benötigt werden, werden mittels der elektrisch beheizten Verdampfer 109 erzeugt. Im Sumpf der Kolonne 101 fällt ein Gemisch an, welches im wesentlichen aus dem Extraktionsmittel und Aromaten, Olefinen oder Diolefinen besteht. Das Sumpfgemisch wird über eine Leitung 116 in die zweite Kolonne 102, im folgenden Stripperkolonne genannt, geleitet. Die Stripperkolonne 102 weist einen Auftriebsteil 117 oberhalb des Zulaufes 116 sowie einen Abtriebsteil 118 unterhalb des Zulaufes 116 auf und enthält ebenfalls Einbauten 107 zur Förderung des Stoffaustausches, z.B. Strukturpackungen. Die Stripperkolonne 102 ist mit einer Sumpfbeheizung 119 ausgerüstet und weist eine kopfseitige Anordnung 120 auf, um dampfförmiges Kopfprodukt abzuziehen, zu kondensieren und einen Teil des Kopfproduktes in die Kolonne 102 zurückzuführen. Die Sumpfbeheizung 119, die z.B. aus zwei Zwangsdurchlaufverdampfern besteht, verdampft das abzutrennende Kohlenwasserstoffprodukt und einen Teil des Extraktionsmittels. Die Dämpfe verlassen die Kolonne über eine Leitung 121, werden in einen nachgeschalteten Kondensator 122 mit Wasser kondensiert und heruntergekühlt. Ein Teil des Kondensates wird über eine Rückflußleitung 123 der Kolonne 102 wieder aufgegeben und dient dort zur Rückwaschung von Extraktionsmittelspuren. Der Rest wird über eine Leitung 124 als Reinprodukt abgegeben. Das abgetriebene Extraktionsmittel wird am Sumpf der Stripperkolonne 102 abgezogen, in einem Wärmetauscher 125 mit Wasser auf eine für die Extraktivdestillation notwendige Temperatur heruntergekühlt und über eine Extraktionsmittelrückführung 126 wieder in die erste Kolonne 101 zurückgeführt.

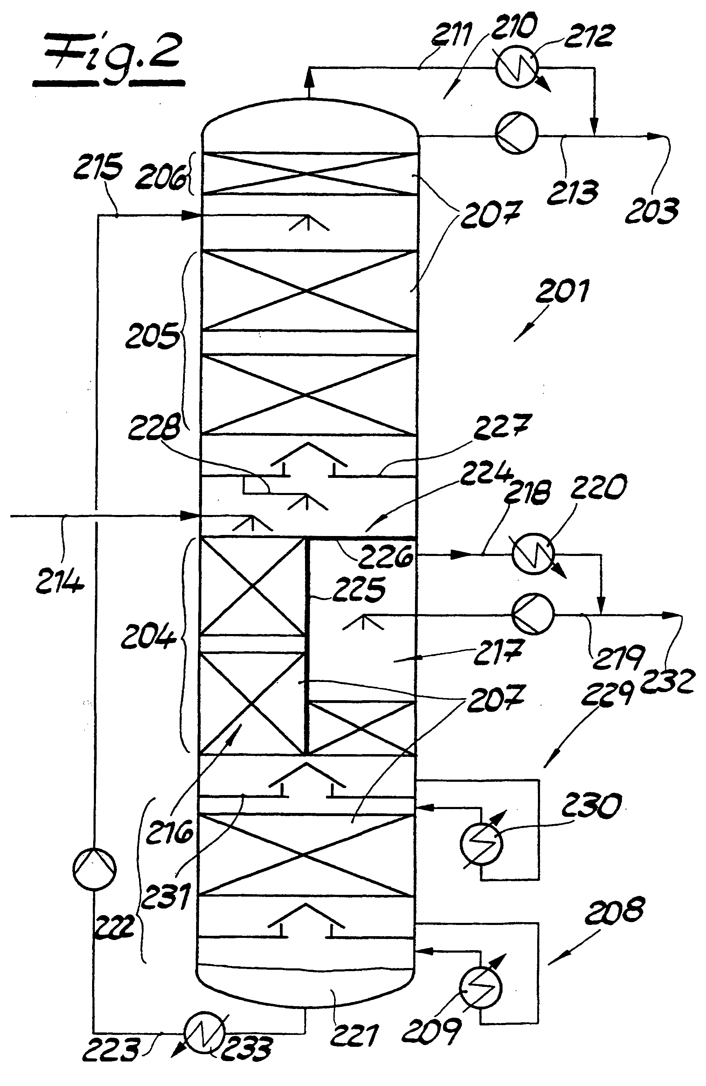

Die in Fig. 2 dargestellte erfindungsgemäße Rektifizierkolonne 201 weist ebenfalls von unten nach oben einen Kolonnenhauptabschnitt 204, eine Raffinatsektion 205 sowie oberhalb der Raffinatsektion einen Kolonnenabschnitt 206 zur Raffinatreinigung auf. Die Kolonnenabschnitte 204, 205, 206 enthalten Einbauten 207 zur Förderung des Stoffaustausches zwischen Dampf- und Flüssigphase, z.B. Strukturpackungen. Am unteren Säulenende ist eine Verdampfungseinrichtung 208 mit mindestens einem Verdampfer 209 vorgesehen. Am Kopf der Kolonne erkennt man eine Anordnung 210 mit Raffinatabzug 211, Kondensator 212 sowie eine Einrichtung 213 für eine Teilrückführung des im Kondensator 212 verflüssigten Raffinats. Das zu trennende Stoffgemisch, z.B. ein Aromaten/Nichtaromatengemisch, Olefin/Paraffingemisch oder Olefin/Paraffin/Diolefingemisch, wird über eine Zulauf 214 zwischen dem Kolonnenhauptabschnitt 204 und der Raffinatsektion 205 aufgegeben. Die Zugabe von Extraktionsmittel erfolgt durch einen Lösungsmittelzulauf 215 an der Oberseite der Raffinatsektion 205. Insoweit entspricht der Aufbau der Rektifizierkolonne 201 dem Stand der Technik.

Erfindungsgemäß weist der Kolonnenhauptabschnitt 204 zwei parallel geschaltete Kammern 216, 217 auf. Eine Kammer 216 ist oberseitig und unterseitig offen, enthält Einbauten 207 zur Verbesserung des Stoffaustausches zwischen Dampf- und Flüssigphase und ist als Abtriebsteil mit mehreren theoretischen Trennstufen für die Abtrennung des Raffinats aus dem extraktionsmittelhaltigen Gemisch ausgelegt. Die andere Kammer 217 ist oberseitig geschlossen und unterseitig offen. Sie enthält ebenfalls Einbauten 207 zur Förderung des Stoffaustausches zwischen Dampfund Flüssigphase. In einem Raum oberhalb der Einbauten 207 sind Einrichtungen für den dampfförmigen Produktabzug eines im wesentlichen extraktionsmittelfreien Extraktes sowie den Rückfluß eines in einem Kondensator 220 verflüssigten Produktteilstromes vorgesehen. Erfindungsgemäß ist ferner zwischen dem Kolonnensumpf 221 und dem Kolonnenhauptabschnitt 204 ein Kolonnenabtriebsteil 222 angeordnet, in dem von oben nach unten eine Aufkonzentrierung des Extraktionsmittels erfolgt. Der Kolonnenabtriebsteil 222 enthält Einbauten 207, die mehrere theoretische Trennstufen bilden. Der Kolonnensumpf 221 ist durch eine Einrichtung zur Extraktionsmittelrückführung 223 mit dem Lösungsmittelzulauf 215 verbunden.

Der Kolonnenhauptabschnitt 204 ist als zylindrischer Kolonnenschuß ausgebildet, der zwischen einem die Raffinatsektion 205 bildenden Kolonnenabschnitt und dem Kolonnenabtriebsteil 222 eingebaut ist und einen Einsatz 224 enthält, der die oberseitig geschlossene Kammer 217 bildet. Der Einsatz 224 besteht im Ausführungsbeispiel aus einer an den Mantel des Kolonnenschusses angeschlossenen, in Längsrichtung der Kolonne sich erstreckenden Trennwand 225 sowie einer Abdeckung 226, die an die Trennwand 225 und einen Mantelabschnitt des Kolonnenschusses angeschlossen ist. Oberhalb des Kolonnenhauptabschnittes 204 ist ein gasdurchlässiger Fangboden 227 für Flüssigkeit angeordnet. Die auf dem Fangboden 227 sich sammelnde Flüssigkeit wird über einen Flüssigkeitsverteiler 228 auf die Einbauten 207 der oberseitig offen Kammer 216 des Kolonnenhauptabschnittes 204 aufgegeben, und zwar zusammen mit dem Ausgangsgemisch, welches über den Zulauf 214 zugeführt wird.

Zwischen dem Kolonnenabtriebsteil 222 und dem Kolonnenhauptabschnitt 204 ist eine Einrichtung 229 zur Beheizung der aus den beiden Kammern 216, 217 des Kolonnenhauptabschnittes 204 ablaufenden Flüssigkeit angeordnet. Sie weist einen Durchlauferhitzer 230 auf. Unterhalb des Kolonnenhauptabschnittes 204 ist ein gasdurchlässiger Fangboden 231 mit einem an den Durchlauferhitzer 230 angeschlossenen Flüssigkeitsablauf angeordnet. Das aus dem Durchlauferhitzer 230 austretende erhitzte Gemisch ist unterhalb des Fangbodens 231 dem Abtriebsteil 222 der Kolonne zuführbar.

Der obere Kolonnenabschnitt 206, der sich von dem Lösungsmittelzulauf 215 bis zum Kopf der Kolonne 201 erstreckt, dient der Raffinatreinigung. Flüssiges Rücklaufraffinat wird am Kopf aufgegeben, wobei im Stoffaustausch mit dem aufsteigenden Dampf Extraktionsmittelreste aus dem Dampfstrom abgeschieden werden. Am unteren Ende dieses Kolonnenabschnittes 206 fällt ein mit Extraktionsmittel beladenes Raffinat flüssig an, welches mit dem über den Lösungsmittelzulauf 215 zugeführten Extraktionsmittel gemischt und in die Raffinatsektion 205 eingeleitet wird. Die an der Unterseite der Raffinatsektion 205 ablaufende Flüssigkeit wird zusammen mit dem zu trennenden Aufgabegemisch 214 auf die oberseitig und unterseitig offene Kammer 216, welche den Abtriebsteil des Kolonnenhauptabschnittes 204 bildet, aufgegeben. Die aus dem Abtriebsteil 216 des Kolonnenhauptabschnittes 204 unterseitig austretende Flüssigkeit besteht im wesentlichen aus Extraktionsmittel und dem mit dem Extraktionsmittel mitgeführten Extrakt, z.B. Aromaten, Olefinen, Diolefinen. Sie wird mit dem aus der zweiten Kammer 217 des Kolonnenhauptabschnittes 204 unterseitig austretenden Flüssigkeit, die einen geringeren Extraktionsmittelgehalt aufweist, gemischt und nach Wärmezufuhr mittels der Einrichtung 229 in den sich unterseitig anschließenden Kolonnenabtriebsteil 222 eingeleitet. Durch Stoffaustausch mit aufsteigendem Dampf fällt ein Sumpfprodukt an, welches aus im wesentlichen reinen Extraktionsmittel besteht. Der aus dem Kolonnenabtriebsteil 222 aufsteigende, mit Extrakt angereicherte Dampf tritt in einem Teilstrom in die oberseitig und unterseitig offene Kammer 216 des Kolonnenhauptabschnittes 204 ein und dient hier zur Strippung des Raffinats. Der andere Teil durchströmt die oberseitig geschlossene Kammer 217 des Kolonnenhauptabschnittes 204, wobei im Stoffaustausch mit flüssigem Kopfprodukt 219 Extraktionsmittelreste aus dem Dampf abgetrennt werden. Ein im wesentlichen reiner Extraktdampf wird am oberen Ende der Kammer 217 mittels der Leitung 218 abgezogen und im Kondensator 220 verflüssigt. Ein Teilstrom wird über die Rückflußleitung 219 der Kolonne 201 wieder aufgegeben, der andere Teil in der Produktleitung 232 abgeführt. Das am unteren Säulenende im wesentlichen in reiner Form anfallende Extraktionsmittel wird durch einen dem Kolonnensumpf 221 zugeordneten Verdampfer 209 geführt, wobei ein Teilstrom verdampft wird und als Dampf in den Kolonnenabtriebsteil 222 aufsteigt. Aus dem Kolonnensumpf 221 wird flüssiges Extraktionsmittel abgezogen, in einem Wärmetauscher 233 mit Kühlwasser auf die für die Trennaufgabe notwendige Temperatur heruntergekühlt und über den Lösungsmittelzulauf 215 wieder in die Kolonne 201 eingespeist.

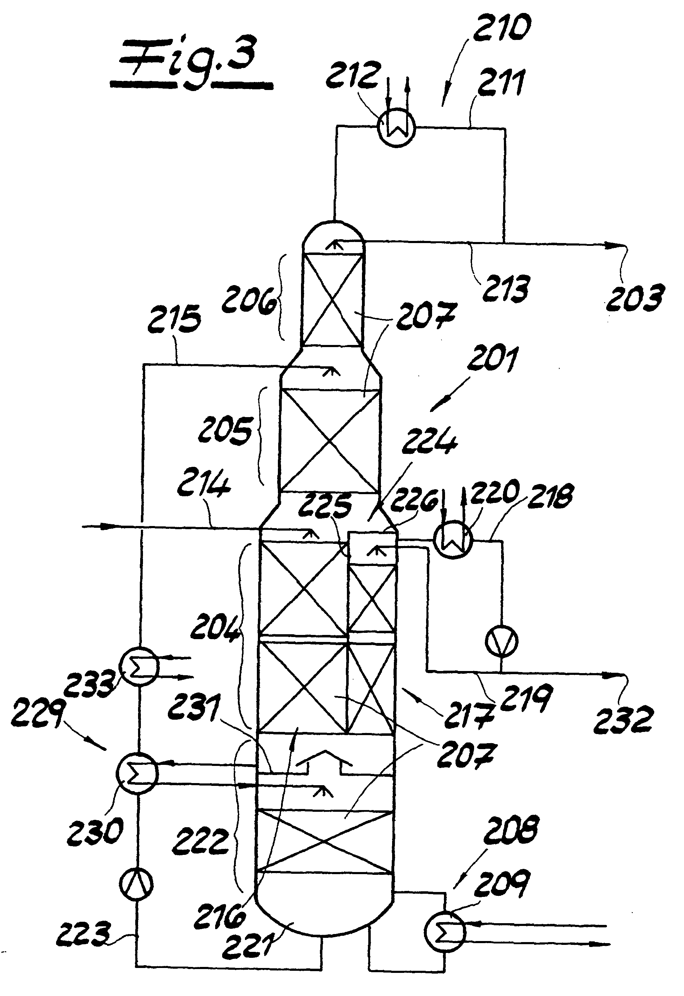

Bei der in Fig. 3 dargestellten Ausführung der erfindungsgemäßen Rektifizierkolonne erfolgt die Beheizung des Durchlauferhitzers 230 im Wärmeaustausch mit dem aus dem Kolonnensumpf 221 abgezogenen Extraktionsmittelstrom. In einem nachgeschalteten Wärmetauscher 233 wird das flüssige Extraktionsmittel anschließend weiter auf die für die Trennaufgabe notwendige Temperatur heruntergekühlt und über den Lösungsmittelzulauf 215 wieder in die Kolonne 201 eingespeist.

Für die erfindungsgemäße Rektifizierkolonne ergeben sich vielfältige Einsatzmöglichkeiten. Als Aufgabeprodukt können Fraktionen des vollhydrierten Pyrolysebenzins, katalytischen Reformates oder druckraffiniertem Kokereibenzols eingesetzt werden. C₄-Fraktionen von Steamcrackern oder FCC-Crackern können zur Gewinnung von Butadien und/oder Butenen eingesetzt werden. Aus C₅-Fraktionen von Steamcrackern oder FCC-Crackern können mittels der erfindungsgemäßen Rektifizierkolonne Isopren und/oder Piperylen gewonnen werden. Mit Hilfe polarer Lösungsmittel als Extraktionsmittel können aus C₆-Fraktionen von vollhydriertem Pyrolysebenzin, Reformat oder druckraffiniertem Kokereibenzol hochreines Benzol gewonnen werden. Aus C₆/C₇-Fraktionen von vollhydriertem Pyrolysebenzin, Reformat oder druckraffiniertem Kokereibenzol lassen sich hochreines Benzol und Toluol mit Nitrierqualität unter Verwendung der erfindungsgemäßen Rektifizierkolonne gewinnen. Aus C₆/C₇/C₈-Fraktionen von vollhydriertem Pyrolysebenzin, Reformat oder druckraffiniertem Kokereibenzol, sind mittels der erfindungsgemäßen Rektifizierkolonne hochreines Benzol, Toluol mit Nitrierqualität und C₈-Aromaten darstellbar. Aus der C₈-Fraktion von Rohpyrolysebenzin kann schließlich Styrol mit Polymerisationsqualität gewonnen werden. Als Extraktionsmittel zur Trennung von Kohlenwasserstoffen eignen sich polare Lösungsmittel. In der Praxis bewährte Extraktionsmittel für Extraktivdestillationen, die auch beim Betrieb der erfindungsgemäßen Rektifizierkolonne zum Einsatz kommen können, sind Sulfolan, N-Methylpyrollidon, Dimethylacetamid, Acetonitril, Dimethylsulfoxid, Dimethylformamid, Ethylenglykole sowie Mischungen der vorstehend genannten Stoffe. Als Extraktionsmittel können ferner Morpholin bzw. N-substituierte Morpholine, ggf. auch in Mischungen mit den vorstehend genannten Extraktionsmitteln, verwendet werden. Schließlich kann den genannten Extraktionsmitteln auch Wasser zugesetzt werden.

### Vergleichsversuche

Mit der in Fig. 1 dargestellten Anlage und der in Fig. 2 dargestellten Rektifizierkolonne wurden Vergleichsversuche durchgeführt. Die beiden Kolonnen 101, 102 der nach dem Stand der Technik gemäß Fig. 1 ausgebildeten Anlage besaßen einen Durchmesser von jeweils 72 mm und enthielten Strukturpackungen. Die Packungshöhe in der ersten, extraktiv arbeitenden Destillationskolonne 101 betrug insgesamt 5,5 m mit folgender Aufteilung der Strukturpackungen:

| | |
|---|---|
| Kolonnenhauptabschnitt (104) | 3 m Packungshöhe |
| Raffinatsektion (105) | 2 m Packungshöhe |
| Kolonnenabschnitt (106) oberhalb der Raffinatzone | 0,5 m Packungshöhe. |

Die Stripperkolonne 102 enthielt eine Strukturpackung mit einer Gesamthöhe von 3 m, wobei 1 m Packungshöhe auf den Abtriebsteil 118 und 2 m Packungshöhe auf den Auftriebsteil 117 entfielen.

Die erfindungsgemäß entsprechend der Fig. 2 ausgebildete Rektifizierkolonne 201 besaß ebenfalls einen Kolonnendurchmesser von 72 mm und war mit Strukturpackungen ausgerüstet, die auf die Kolonnenabschnitte wie folgt aufgeteilt waren:

| | |
|---|---|
| Kolonnenabtriebsteil (222) | 1 m Packungshöhe |
| Abtriebsteil des Kolonnenhauptabschnittes (216) | 3 m Packungshöhe |
| Parallele Kammer (217) des Kolonnenhauptabschnittes | 2 m Packungshöhe |
| Raffinatsektion (205) | 2 m Packungshöhe |
| Oberer Kolonnenabschnitt (206) zur Raffinatreinigung | 0,5 m Packungshöhe. |

### Beispiel 1:

Untersucht wurde die Gewinnung von Reinbenzol aus einem C₆-Schnitt aus vollhydriertem Pyrolysebenzin. Das Aufgabegemisch hatte folgende Zusammensetzung:

| | |
|---|---|
| C₅-Paraffine | 0,04 Gew.-% |
| Cyclopentan | 3,49 Gew.-% |
| C₆-Paraffine | 14,34 Gew.-% |
| Methylcyclopentan | 10,15 Gew.-% |
| Benzol | 63,02 Gew.-% |
| Cyclohexan | 3,93 Gew.-% |
| C₇-Paraffine | 3,49 Gew.-% |
| Dimethylcyclopentane | 1,34 Gew.-% |
| Methycyclohexan | 0,20 Gew.-% |
| Toluol | <0,01 Gew.-% |
| Summe | 100,00 Gew.-% |

Als selektives Lösungsmittel wurde N-Formylmorpholin verwendet. Die nachfolgende Tabelle zeigt in einer vergleichenden Darstellung die Ergebnisse der Extraktivdestillation in einer Anlage (I) nach dem Stand der Technik mit zwei Kolonnen und in der erfindungsgemäßen Rektifizierkolonne (II). Angeben sind die Stoffströme, die Heizleistung, Benzolausbeute und Produktreinheit. Bei nahezu identischen Werten für die Produktausbeute und die Produktreinheit fordert der Betrieb der erfindungsgemäßen Rektifizierkolonne eine um 16,3 % deutlich kleinere Heizleistung im Vergleich zu der Heizleistung der nach dem Stand der Technik ausgeführten Anlage.

| **Beispiel 1** | | **I** | **II** |
|---|---|---|---|
| Aufgabemenge | kg/h | 3,49 | 3,50 |
| Extraktionsmittelaufgabe | kg/h | 12,00 | 12,00 |
| Raffinatmenge (Leitung 103, 203) | kg/h | 1,32 | 1,31 |
| Raffinatrückfluß | kg/h | 0,65 | 0,66 |
| Produktmenge (Leitung 124, 232) | kg/h | 2,17 | 2,19 |
| Produktrückfluß | kg/h | 1,09 | 0,55 |
| Heizleistung für die Kolonne 101 | W | 394 | |
| Heizleistung für die Stripperkolonne 102 | W | 566 | |
| Summe Heizleistung für beide Kolonnen | W | 960 | |
| Heizleistung für die erfindungsgemäße Kolonne 201 | W W | | 804 804 |
| Verringerung der Heizleistung bei Verwendung der erfindungsgemäßen Kolonne im Vergleich zur konventionellen Kolonnenschaltung | % | | 16,3 |
| Benzolausbeute | % | 99,3 | 99,4 |
| Benzolreinheit | | | |
| - Nichtaromaten | ppm | 68 | 69 |
| - Toluol | ppm | 7 | 6 |
| - Lösungsmittel | ppm | <1 | <1 |

### Beispiel 2:

Untersucht wurde die Gewinnung von Reinbenzol und Toluol mit Nitrierqualität aus einem C₇-Schnitt aus katalytischem Reformat. Das Aufgabegemisch hatte folgende Zusammensetzung:

| | |
|---|---|
| C₅-Paraffine | 18,70 Gew.-% |
| C₅-Olefine | 0,65 Gew.-% |
| Cyclopentan | 0,39 Gew.-% |
| C₆-Paraffine | 2,13 Gew.-% |
| C₆-Olefine | 0,01 Gew.-% |
| Methycyclopentan | 0,05 Gew.-% |
| Benzol | 8,40 Gew.-% |
| C₇-Paraffine | 14,75 Gew.-% |
| C₇-Olefine | 0,10 Gew.-% |
| C₇-Naphthene | 0,15 Gew.-% |
| C₈-Paraffine | 0,70 Gew.-% |
| C₈-Naphthene | 0,04 Gew.-% |
| Toluol | 53,27 Gew.-% |
| C₈-Aromaten | 0,63 Gew.-% |
| C₉-Paraffine | 0,03 Gew.-% |
| Summe | 100,00 Gew.-% |

Als selektives Lösungsmittel in der Extraktivdestillation wurde N-Formylmorpholin verwendet. Die nachfolgende Tabelle zeigt in einer vergleichenden Darstellung die Ergebnisse der Extraktivdestillation in der Anlage (I) nach dem Stand der Technik mit zwei Kolonnen und in der erfindungsgemäßen Rektifizierkolonne (II). Aufgetragen sind die Stoffströme, die Heizleistung sowie die Zusammensetzung des an der Produktleitung 124 bzw. 232 abgezogenen Aromatenproduktes. Bei nahezu identischen Werten für die Benzolausbeute, die Toluolausbeute und die Zusammensetzung des Aromatenproduktes ermöglicht die erfindungsgemäße Rektifizierkolonne eine deutliche Senkung der Heizleistung um 17,9 %.

| **Beispiel 2** | | **I** | **II** |
|---|---|---|---|
| Aufgabemenge | kg/h | 5,59 | 5,59 |
| Extraktionsmittelaufgabe | kg/h | 14,00 | 14,00 |
| Raffinatmenge (Leitung 103, 203) | kg/h | 2,11 | 2,10 |
| Raffinatrückfluß | kg/h | 1,05 | 1,05 |
| Produktmenge (Leitung 124, 232) | kg/h | 3,49 | 3,48 |
| Produktrückfluß | kg/h | 0,77 | 0,79 |
| Heizleistung für die Kolonne 101 | W | 556 | |
| Heizleistung für die Stripperkolonne 102 | W | 707 | |
| Summe Heizleistung für beide Kolonnen | W | 1263 | |
| Heizleistung für die erfindungsgemäße Kolonne 201 | W | | 1037 |
| Verringerung der Heizleistung bei Verwendung der erfindungsgemäße Rektifizierkolonne im Vergleich zur konventionellen Kolonnenschaltung | % | | 17,9 |

In einer nachgeschalteten fraktionierenden Destillation kann das Reinaromatenprodukt in Reinbenzol und Toluol mit Nitrierqualität aufgetrennt werden.

### Beispiel 3:

Untersucht wurde die Gewinnung von Reinbenzol aus einem C₆-Schnitt aus katalytischem Reformat. Das Aufgabegemisch hatte folgende Zusammensetzung:

| | |
|---|---|
| C₅-Paraffine | 12,06 Gew.-% |
| Cyclopentan | 0,11 Gew.-% |
| C₆-Paraffine | 48,74 Gew.-% |
| Methylcyclopentan | 0,91 Gew.-% |
| Benzol | 28,53 Gew.-% |
| Cyclohexan | 0,69 Gew.-% |
| C₇-Paraffine | 8,81 Gew.-% |
| Dimethylcyclopentane | 0,09 Gew.-% |
| 1-Heptene | 0,06 Gew.-% |
| Toluol | 20 ppm |
| Summe | 100,00 Gew.-% |

Als selektives Lösungsmittel in der Extraktivdestillation wurde N-Formylmorpholin verwendet. Die nachfolgende Tabelle zeigt in einer vergleichenden Darstellung die Ergebnisse der Extraktivdestillation in einer Anlage (I) nach dem Stand der Technik mit zwei Kolonnen und in der erfindungsgemäßen Rektifizierkolonne (II). Angegeben sind die Stoffströme, die Heizleistung, Benzolausbeute und Produktreinheit. Bei nahezu identischen Werten für die Produktausbeute und die Produktreinheit erfordert der Betrieb der erfindungsgemäßen Rektifizierkolonne eine um 29,2 % deutlich kleinere Heizleistung im Vergleich zu der Heizleistung der nach dem Stand der Technik ausgeführten Anlage.

| **Beispiel 3** | | **I** | **II** |
|---|---|---|---|
| Aufgabemenge | kg/h | 5,21 | 5,20 |
| Extraktionsmittelaufgabe | kg/h | 11,98 | 12,00 |
| Raffinatmenge (Leitung 103, 203) | kg/h | 3,73 | 3,73 |
| Raffinatrückfluß | kg/h | 1,86 | 1,85 |
| Produktmenge (Leitung 124, 232) | kg/h | 1,48 | 1,50 |
| Produktrückfluß | kg/h | 1,92 | 0,28 |
| Heizleistung für die Kolonne 101 | W | 725 | |
| Heizleistung für die Stripperkolonne 102 | W | 495 | |
| Summe Heizleistung für beide Kolonnen | W | 1220 | |
| Heizleistung für die erfindungsgemäße Kolonne 201 | W | | 864 |
| Verringerung der Heizleistung bei Verwendung der erfindungsgemäße Rektifizierkolonne im Vergleich zur konventionellen Kolonnenschaltung | % | | 29,2 |
| Benzolausbeute | % | 99,5 | 99,5 |
| Benzolreinheit | | | |
| - Nichtaromaten | ppm | 4 | 6 |
| - Toluol | ppm | 8 | 70 |
| - Lösungsmittel | ppm | <1 | <1 |

## Patentansprüche

1. Rektifizierkolonne für die Extraktivdestillation von eng- oder azeotrop siedenden Gemischen mit
einem Kolonnenhauptabschnitt (204), der zwei parallel geschaltete Kammern (216, 217) aufweist,
einer Raffinatsektion (205) oberhalb des Kolonnenhauptabschnittes,
einer Verdampfungseinrichtung (208) am unteren Säulenende mit mindestens einem Verdampfer (209),
einer Anordnung (210) am Kopf der Kolonne mit Raffinatabzug (211), Kondensator (212) und einer Einrichtung (213) für eine Teilrückführung des in einem Kondensator verflüssigten Raffinats,
einem Zulauf (214) zwischen dem Kolonnenhauptabschnitt (204) und der Raffinatsektion (205) für die Aufgabe eines zu trennenden Ausgangsgemisches und
einem Lösungsmittelzulauf an der Oberseite der Raffinatsektion für die Aufgabe von Extraktionsmittel,
wobei eine Kammer (216) des Kolonnenhauptabschnittes oberseitig und unterseitig offen ist, Einbauten (207) zur Verbesserung des Stoffaustausches enthält und als Abtriebsteil mit mehreren theoretischen Trennstufen für die Abtrennung des Raffinats aus dem extraktionsmittelhaltigen Gemisch ausgelegt ist, wobei die andere Kammer (217) oberseitig gegenüber dem Innenraum der Kolonne geschlossen und unterseitig offen ist, Einbauten (207) zur Förderung des Stoffaustausches enthält und in einem Raum oberhalb der Einbauten (207) Einrichtungen (218, 219) für den dampfförmigen Abzug eines im wesentlichen extraktionsmittelfreien Produktes sowie für den Rückfluß eines verflüssigten Produktteilstromes aufweist, und wobei der Kolonnensumpf (221) am unteren Säulenende durch eine Einrichtung (223) zur Extraktionsmittelrückführung mit dem Lösungsmittelzulauf (215) verbunden ist, **dadurch gekennzeichnet, daß** zwischen dem Kolonnensumpf (221) und dem Kolonnenhauptabschnitt (204) ein Kolonnenabtriebsteil (222) mit mehreren theoretischen Trennstufen angeordnet ist, in dem von oben nach unten eine Aufkonzentrierung des Extraktionsmittels erfolgt, wobei unterhalb des Kolonnenhauptabschnittes (204) ein gasdurchlässiger Fangboden (231) angeordnet ist, dessen Flüssigkeitsablauf an einen Durchlauferhitzer (230) zur Beheizung der aus den beiden Kammern (216, 217) des Kolonnenhauptabschnittes (204) ablaufenden Flüssigkeit angeschlossen ist, und wobei das aus dem Durchlauferhitzer (230) austretende erhitzte Gemisch unterhalb des Fangbodens (231) dem Abtriebsteil (222) der Kolonne zuführbar ist.

2. Rektifizierkolonne nach Anspruch 1, **dadurch gekennzeichnet, daß** die Beheizung des Durchlauferhitzers (230) im Wärmeaustausch mit dem aus dem Kolonnensumpf (221) abgezogenen Extraktionsmittelstrom erfolgt.

3. Rektifizierkolonne nach Anspruch 1 oder 2, **dadurch gekennzeichnet, daß** der Kolonnenhauptabschnitt (204) als zylindrischer Kolonnenschuß ausgebildet ist, der zwischen einem die Raffinatsektion (205) bildenden Kolonnenabschnitt und dem Kolonnenabtriebsteil (222) eingebaut ist und einen Einsatz (224) enthält, der die oberseitig geschlossene Kammer (217) bildet.

4. Rektifizierkolonne nach einem der Ansprüche 1 bis 3, **dadurch gekennzeichnet, daß** der Einsatz (224) aus einer an den Mantel des Kolonnenschusses angeschlossenen, in Längsrichtung der Kolonne sich erstreckenden Trennwand (225) sowie einer Abdeckung (226), die an die Trennwand (225) und einen Mantelabschnitt des Kolonnenschusses angeschlossen ist, besteht.

5. Rektifizierkolonne nach einem der Ansprüche 1 bis 4, **dadurch gekennzeichnet, daß** zwischen der Raffinatsektion (205) und dem Kolonnenhauptabschnitt (204) ein gasdurchlässiger Fangboden (227) für Flüssigkeit angeordnet ist, wobei an den Fangboden (227) ein Flüssigkeitsverteiler (228) angeschlossen ist, der die ablaufende Flüssigkeit auf die Einbauten (207) der oberseitig offenen Kammer (216) des Kolonnenhauptabschnittes (204) aufgibt.

6. Rektifizierkolonne nach einem der Ansprüche 1 bis 5, **dadurch gekennzeichnet, daß** oberhalb der Raffinatzone (205) ein Kolonnenabschnitt (206) mit mehreren theoretischen Trennstufen zur Raffinatreinigung angeordnet ist, der sich von dem Lösungsmittelzulauf (215) bis zum Kopf der Kolonne erstreckt.

## Claims

1. Rectifying column for the extractive distillation of narrow boiling range or azeotropically boiling mixtures with
a main column section (204) which exhibits two chambers (216, 217) operated in parallel,
a raffinate section (205) above the main column section,
an evaporation device (2308) at the lower column end with at least one evaporator (209),
an arrangement (210) at the head of the column with a raffinate discharge (211), condenser (212) and a device (213) for partial recycling of the raffinate liquefied in a condenser
an inlet (214) between the main column section (204) and the raffinate section (205) for the introduction of a starting mixture to be separated and
a solvent inlet on the upper side of the raffinate section for the introduction of extraction agent,
a chamber (216) of the main column section being open at the top and bottom, containing built-in units (207) to improve the material exchange and being designed as a stripping component with several theoretical separation stages for the separation of the raffinate from the mixture containing extraction agent, the other chamber (217) being closed at the top vis-à-vis the inside of the column and open at the bottom, containing built-in units (207) to improve the material exchange and exhibiting in a space above the built-in units (207) installations (218, 219) for the vapour-type discharge of an essentially extraction agent-free product and for the backflow of a liquefied partial product stream and the column sump (221) at the lower column end being connected with the solvent inlet (215) by a device (223) for recycling extraction agent, **characterised in that**, between the column sump (221) and the main column section (204), a column stripping component (222) with several theoretical separation stages is arranged in which component a concentration of the extraction agent takes place from the top downwards, below the main column section (204) a gas-permeable collecting tray (231) being arranged whose liquid drain is connected to a through-flow heater (230) for heating of the liquid flowing from the two chambers (216, 217) of the main column section (204) and the heated mixture discharged from the through-flow heater (230) being conveyable to the stripping component (222) of the column below the collecting tray (231).

2. Rectifying column according to claim 1 **characterised in that** the heating of the through-flow heater (230) takes place in heat exchange with the stream of extraction agent withdrawn from the column sump (221).

3. Rectifying column according to claim 1 or 2 **characterised in that** the main column section (204) is formed as a cylindrical column trajectory which is built in between a column section forming the raffinate section (205) and the column stripping component (222) and contains an insert (224) which forms the chamber (217) closed at the top.

4. Rectifying column according to one of claims 1 to 3 **characterised in that** the insert (224) consists of a separating wall (225), which is connected to the jacket of the column trajectory and extends in the longitudinal direction of the column, and a cover (226) which is connected to the separating wall (225) and a jacket section of the column trajectory.

5. Rectifying column according to one of claims 1 to 4 **characterised in that**, between the raffinate section (205) and the main column section (204) a gas-permeable collecting tray (227) for liquid is arranged, a liquid distributor (228) being connected to the collecting tray (227) which distributor applies the liquid flowing off onto the built-in units (207) of the chamber (216 open at the top of the main column section (204).

6. Rectifying column according to one of claims 1 to 5 **characterised in that**, above the raffinate zone (205), a column section (206) with several theoretical separation stages for raffinate purification is arranged which section extends from the solvent inlet (215) to the head of the column.

## Revendications

1. Colonne de rectification pour la distillation extractive de mélanges bouillant de manière restreinte ou azéotropique, comportant
une section principale de colonne (204) qui présente deux chambres montées en parallèle (216, 217),
une section de produit raffiné (205) au dessus de la section principale de colonne,
un dispositif de vaporisation (208) situé à l'extrémité inférieure de la colonne et comportant au moins un évaporateur (209),
un agencement situé (210) à la tête de la colonne et comportant une sortie de produit raffiné (211), un condensateur (212) et un dispositif (213) de renvoi partiel du produit raffiné liquéfié dans un condensateur,
une arrivée (214) située entre la section principale de colonne (204) et la section de produit raffiné (205) pour l'incorporation d'un mélange initial à diviser et
une arrivée de solvant située sur le côté supérieur de la section de produit raffiné pour l'incorporation d'agent d'extraction,
une chambre (216) de la section principale de colonne étant ouverte du côté supérieur et inférieur, contenant des pièces intégrées (207) servant à améliorer l'échange de substance, cette chambre étant conçue sous forme d'un élément de purge présentant plusieurs étages théoriques de division pour séparer le produit raffiné du mélange contenant de l'agent d'extraction, l'autre chambre (217) étant fermée du côté supérieur vis-à-vis de l'espace intérieur de la colonne et ouverte du côté inférieur, contenant des pièces intégrées (207) pour favoriser l'échange de substance et présentant, dans un espace situé au dessus des pièces intégrées (207), des dispositifs (218, 219) pour l'extraction sous forme de vapeur d'un produit sensiblement exempt d'agent d'extraction ainsi que pour le reflux d'un flux partiel de produit liquéfié, et le fond de la colonne (221) étant, à l'extrémité inférieure de la colonne, relié par un dispositif (223) de renvoi d'agent d'extraction à l'arrivée de solvant (215), **caractérisée en ce qu'**entre le fond de la colonne (221) et la section principale de colonne (204), il est disposé un élément de purge de colonne (222) comportant plusieurs étages théoriques de division et dans lequel se produit du haut vers le bas une concentration de l'agent d'extraction, tandis qu'en dessous de la section principale de colonne (204), est disposé un fond récepteur (231) perméable au gaz, dont la sortie de liquide est raccordée à un réchauffeur de transit (230) permettant de chauffer le liquide sortant des deux chambres (216, 217) de la section principale de colonne (204), et que le mélange chauffé sortant du réchauffeur de transit (230), en dessous du fond récepteur (231), peut être acheminé vers l'élément de purge (222) de la colonne.

2. Colonne de rectification selon la revendication 1, **caractérisée en ce que** le chauffage exercé par le réchauffeur de transit (230) a lieu en échange thermique avec le flux d'agent d'extraction extrait du fond de la colonne (221).

3. Colonne de rectification selon la revendication 1 ou 2, **caractérisée en ce que** la section principale de colonne (204) est réalisée sous forme d'une tige de colonne cylindrique qui est montée entre une section de colonne formant la section de produit raffiné (205) et l'élément de purge de colonne (22) et contient un insert (224) qui constitue la chambre fermée sur le côté supérieur (217).

4. Colonne de rectification selon l'une quelconque des revendications 1 à 3, **caractérisée en ce que** l'insert (224) est composé d'une paroi séparatrice (225) raccordée à la chemise de la tige de colonne et s'étendant dans le sens longitudinal de la colonne ainsi que d'un recouvrement (226) qui est raccordé à la paroi séparatrice (225) et à une section de chemise de la tige de colonne.

5. Colonne de rectification selon l'une quelconque des revendications 1 à 4, **caractérisée en ce qu**'entre la section de produit raffiné (205) et la section principale de colonne (204), un fond récepteur pour le liquide (227), perméable au gaz, est disposé, tandis qu'au fond récepteur (227) est raccordé un distributeur de liquide (228) qui verse le liquide sortant sur les pièces intégrées (207) dans la chambre (216) ouverte sur le côté supérieur de la section principale de colonne (204).

6. Colonne de rectification selon l'une quelconque des revendications 1 à 5, **caractérisée en ce qu'**au dessus de la zone de produit raffiné (205), est disposée une section de colonne (206) présentant plusieurs étages théoriques de division pour la purification du produit raffiné et qui s'étend depuis l'arrivée de solvant (215) jusqu'à la tête de la colonne.
